# EUROPÄISCHE PATENTSCHRIFT

(11) **EP 2 855 869 B1**
(45) Veröffentlichungstag und Bekanntmachung des Hinweises auf die Patenterteilung: **19.07.2017**
(21) Anmeldenummer: 13725606.1
(22) Anmeldetag: 17.05.2013
(51) Int. Cl.: F01N 3/20, F01N 11/00

(54) **VERFAHREN ZUM BETRIEB EINER ABGASANLAGE**
METHOD FOR OPERATING AN EXHAUST GAS SYSTEM
PROCÉDÉ POUR FAIRE FONCTIONNER UN SYSTÈME D'ÉCHAPPEMENT

(30) Priorität: 30.05.2012 DE 102012104669
(43) Veröffentlichungstag der Anmeldung: 08.04.2015
(73) Patentinhaber: Continental Automotive GmbH, 30165 Hannover (DE)
(72) Erfinder: KRUSE, Carsten, 53842 Troisdorf (DE); NAGEL, Thomas, 51766 Engelskirchen (DE); DORENKAMP, Richard, 12623 Berlin (DE); KAHMANN, Gerhard, 38302 Wolfenbüttel (DE); DÜSTERDIEK, Thorsten, 30659 Hannover (DE)
(74) Vertreter: KNH Patentanwälte
(86) Internationale Anmeldenummer: PCT/EP2013/060305
(87) Internationale Veröffentlichungsnummer: WO 2013/178495

(56) Entgegenhaltungen:
- DE-A1- 4 133 117
- DE-A1- 19 651 559
- DE-A1- 19 701 355

## Beschreibung

Die Erfindung betrifft ein Verfahren zum Betrieb einer Abgasanlage einer Verbrennungskraftmaschine eines Kraftfahrzeuges, die den Schadstoffausstoß der Verbrennungskraftmaschine insbesondere nach dem Kaltstart reduzieren soll.

Die Abgasvorschriften für Verbrennungskraftmaschinen wurden in den letzten Jahren immer weiter verschärft. Dies gilt insbesondere auch für das Kaltstartverhalten von Verbrennungskraftmaschinen, also die Zeitspanne unmittelbar nach Neustarten der Verbrennungskraftmaschine eines Kraftfahrzeugs. Gerade in diesem Verbrennungsprozess werden vermehrt Kohlenwasserstoffe unverbrannt durch die Abgasleitung an die Umgebung abgeführt. Bei dem Einsatz von Katalysatoren in der Abgasleitung erfolgt die Umsetzung dieser unverbrannten Kohlenwasserstoffen in dem Katalysator erst ab einer bestimmten Temperatur. Diese sogenannte light-off Temperatur (Anspringtemperatur) wird jedoch erst dann erreicht, wenn der Katalysator durch das Abgas oder durch andere Heizeinrichtungen entsprechend erwärmt wurde.

Zudem sind Systeme und Anordnungen bekannt, bei denen das Kaltstartverhalten von Katalysatoren verbessert wird, indem elektrisch beheizbare Strukturen mit dem Katalysator und/oder dem Abgas in Kontakt gebracht werden, um den Aufheizprozess bis hin zur Anspringtemperatur zu begünstigen und somit rasch die effektive katalytische Umsetzung anzustoßen. Für diesen Heizprozess ist eine angepasste Betriebsweise wünschenswert, gerade in Relation zum Energieverbrauch, der Reaktionsfreudigkeit der Abgasschadstoffe und/oder der Umgebungsbedingungen.

Die DE 197 01 355 A1 betrifft eine Einrichtung zum Erfassen der Alterung eines Katalysators. Die Erfassung erfolgt im Leerlauf der Brennkraftmaschine. Es wird dabei eine elektrische Leistung solange zugeführt, bis eine Aktivierung des Heizkatalysators festgestellt wird. Entsprechend kann die Zeit der elektrischen Leistungszuführung gesteuert werden.

Die DE 41 33 117 A1 betrifft ein Verfahren zur Abgasreinigung, wobei die Alterung eines Katalysators bei dessen Vorwärmung berücksichtigt wird. Es wird dort vorgeschlagen, die Alterung des Katalysators durch empirische Ermittlungen oder durch Signale von Lambdasonden zu bestimmen. In Abhängigkeit von dem ermittelten Alterungszustand wird eine angepasste Vorwärmung vorgenommen, die durch eine Erhöhung der Vorwärmtemperatur oder durch eine verlängerte Vorwärmzeit realisiert wird.

Die DE 196 51 559 A1 betrifft ein Verfahren zum Erfassen der Alterung eines Katalysators und zum abgestimmten Unterstützen einer Erwärmung des Katalysators durch eine Heizeinrichtung. Durch das Verfahren soll erreicht werden, dass immer eine möglichst geringe zusätzliche Beheizung bereitgestellt wird.

Der vorliegenden Erfindung liegt daher die Aufgabe zugrunde, die mit Bezug auf den Stand der Technik geschilderten Probleme zumindest teilweise zu lösen. Insbesondere soll ein Verfahren zum Betrieb einer Abgasanlage angegeben werden, das sicherstellt, dass eine möglichst geringe Menge an unverbrannten Kohlenwasserstoffen durch die Abgasleitung in die Umgebung strömt. Zudem soll ein solches System für die gesamte Lebenszeit bzw. Betriebszeit in einem Kraftfahrzeug hinsichtlich der Schadstoffwerte besonders gut einstellbar sein und effizient betrieben werden können.

Diese Aufgaben werden durch ein Verfahren gemäß den Merkmalen des Patentanspruchs 1 gelöst. Vorteilhafte Ausgestaltungen des erfindungsgemäßen Verfahrens beziehungsweise deren Implementierung in ein Kraftfahrzeug sind in den abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, erläutert die Erfindung weiter und führt ergänzende Ausführungsbeispiele der Erfindung an.

Das erfindungsgemäße Verfahren ist zum Betrieb einer Abgasanlage einer Verbrennungskraftmaschine geeignet, bei der die Abgasanlage zumindest eine Heizeinrichtung und einen Katalysator zur Umsetzung von Kohlenwasserstoffen aufweist. Die Heizeinrichtung wird in Abhängigkeit des Alterungszustandes des Katalysators angepasst betrieben. Insbesondere ist dieses Verfahren geeignet zum Betrieb einer Abgasanlage einer Diesel-Kraftmaschine. In Abgasanlagen von Dieselmotoren werden Diesel-Oxidationskatalysatoren (DOC) eingesetzt, die im Abgas enthaltene Partikel, Kohlenwasserstoffe und Kohlenmonoxide durch Oxidation umsetzen. Die light-off Temperaturen liegen hier im Neuzustand des Katalysators bei ca. 130 bis 180°C. Diese verschieben sich jedoch bei Alterung des Katalysators hin zu höheren Temperaturen.

Ein Katalysator zur Umsetzung von Kohlenwasserstoffen betrifft insbesondere einen so genannten Oxidationskatalysator oder auch Diesel-Oxidationskatalysator (DOC), also einen Trägerkörper (z.B. nach Art eines keramischen und/oder metallischen Wabenkörpers) mit einer oxidativ wirkenden Beschichtung. Die oxidativ wirkende Beschichtung kann eine Trägersubstanz (wie zum Beispiel einen so genannten Washcoat) umfassen, der mit Edelmetallen und/oder Seltenen Erden dotiert ist. Hierbei kommen insbesondere Platin, Palladium und ähnliches zum Einsatz.

Die wenigstens eine Heizeinrichtung umfasst insbesondere ein elektrisches, regelbares Heizelement. Die Heizeinrichtung ist dabei bevorzugt für das Abgas durchströmbar (z. B. mit einer Vielzahl von Durchströmungsöffnungen oder Kanälen ausgeführt) und geeignet, die Temperatur des Abgases beim Durchströmen zu erhöhen. Ganz besonders bevorzugt ist, dass die Heizeinrichtung einen Wabenkörper umfasst, insbesondere einen, der mit metallischen Blechen bzw. Folien aufgebaut ist.

Die Heizeinrichtung ist bevorzugt stromaufwärts des Katalysators angeordnet, so dass das Abgas zuerst die Heizeinrichtung und erst dann den Katalysator durchströmt. Insbesondere ist die Heizeinrichtung zumindest teilweise in dem Katalysator integriert und/oder unmittelbar dazu benachbart angeordnet. Hierbei ist besonders bevorzugt, dass die Heizeinrichtung und der Katalysator eine Baueinheit bilden, bei der eine entsprechende katalytische Beschichtung zur Umwandlung von Kohlenwasserstoffen direkt auf der beheizbaren Heizeinrichtung aufgebracht ist, so dass durch die Aktivierung der Heizeinrichtung die katalytische Beschichtung unmittelbar auf entsprechend gewünschte Temperaturen erwärmt wird.

Zum Betrieb der wenigstens einen Heizeinrichtung ist diese regelmäßig mit einer entsprechenden Stromversorgung / Spannungsversorgung und einer Steuerung verbunden. Auf diese Weise ist es möglich, eine Aktivierung bzw. Deaktivierung der wenigstens einen Heizeinrichtung mittels der Steuerung zu vorgegebenen Zeitpunkten und/oder Parametern zu veranlassen. Wie diese Regelung bzw. dieser Betrieb erfolgt, ist Gegenstand der vorliegenden Erfindung.

Demnach soll die Heizeinrichtung in Abhängigkeit des Alterungszustand des Katalysators angepasst betrieben werden. Das heißt mit anderen Worten auch, dass die bereitgestellte Heizleistung auf den aktuellen Alterungszustandes des Katalysators angeglichen, eingestellt und/oder eingerichtet ist. Dies bedeutet insbesondere, dass bei dem Betrieb der Heizeinrichtung das aktuelle Umsetzungsvermögen des Katalysators bestimmt bzw. ermittelt und berücksichtigt wird. Hierbei sind insbesondere Betriebsprozesse umfasst, die eine über die Lebensdauer der Abgasanlage (allein) in Abhängigkeit vom Alterungszustand des Katalysators veränderliche Betriebsweise zur Folge haben. Der Alterungszustand des Katalysators kann dabei insbesondere durch folgende Faktoren gekennzeichnet sein:
- Thermische Alterung:
   Hierbei kommt es aufgrund der thermischen Belastung des Katalysators über die Lebensdauer zu einer Verkleinerung der katalytisch aktiven Oberfläche, insbesondere durch Sintervorgänge bei Temperaturen oberhalb von 800°C und/oder Abschmelzen.
- Chemische Vergiftung:
   Chemische Reaktionen mit Fremdstoffen (Kraftstoff, Öladditive, etc.), können die katalytisch aktive Beschichtung ebenfalls zerstören.
- Mechanische Vergiftung:
   Während der Lebensdauer des Katalysators kann auch eine zunehmende Abdeckung der katalytisch aktiven Beschichtung einsetzen, z. B. durch Blei, Schwefel, Phosphor, Mangan etc., bzw. durch Kraftstoff und/oder Öl.

Der Alterungszustand des Katalysators kann insbesondere anhand der Laufleistung des Katalysators bzw. des Kraftfahrzeuges bestimmt werden. Weiterhin kann der Alterungszustand anhand der Zeitspanne seit der Fertigung des Katalysators und/oder seit dem Einsatz in einer Abgasanlage ermittelt werden. Weitere Parameter, die bei der Bestimmung des Alterungszustands ein Rolle spielen können sind: Art der katalytischen Beladung, Beschichtungsart, Beschichtungsdicke, Anzahl der Regenerationszyklen im Betrieb, maximal erreichte Temperaturen, gemittelte Temperatur (oder Temperaturhistogramm), durchgeströmte Abgasmenge, Abgasart, Kraftstoffart, ggf. Kombination von unterschiedlichen Kraftstofftypen (Zusätze von Bioethanol etc.), Ölverbrauch, etc. Auch eine (unterschiedlich gewichtete) Kombination dieser Parameter zur Bestimmung und/oder Gewichtung des Alterungszustands ist möglich. Zudem ist auch möglich, dass die Konvertierungsleistung des Katalysators sensorisch erfasst wird, z.B. mittels Lambda-Sensoren, die im und/oder nach dem Katalysator angeordnet sind und die Speicherfähigkeit des Katalysators für Sauerstoff bestimmen. Aus diesen Messwerten ließe sich auch die Konvertierungsleistung des Katalysators bestimmen.

Erfindungsgemäß wird die Heizeinrichtung zumindest in Abhängigkeit einer vorgegebenen Grenztemperatur des Katalysators betrieben, wobei die vorgegebene Grenztemperatur in Abhängigkeit von einem aktuellen Alter des Katalysators variiert.

Bei einem neuwertigen Katalysator liegt die light-off-Temperatur tiefer als bei einem bereits gealterten Katalysator. Das kann dazu führen, dass die light-off-Temperatur eines neuwertigen Katalysators in einem so tiefen Temperaturbereich liegt, dass dieser bereits einsatzbereit ist, wenn nur eine unerhebliche Menge an unverbrannten Kohlenwasserstoffe den Katalysator passiert hat. So ist hier beispielsweise für diese Konstellation ein Zuheizen der Abgasanlage nicht zwingend erforderlich. Infolge der zunehmenden Alterung des Katalysators wird jedoch die light-off-Temperatur und/oder die Umsetzungseffektivität des Katalysators zu höheren Temperaturwerten verschoben, so dass im Laufe der vielen Betriebsstunden des Systems und damit über die Lebensdauer des Systems eine unzulässige Menge an unverbrannten Kohlenwasserstoffen den Katalysator passiert hat, bevor der stromabwärts angeordnete Katalysator die light-off-Temperatur allein erreicht. Dann soll entsprechend dieser aktuellen Situation eine Zufuhr an Heizleistung erfolgen.

Aus diesem Grund wird hier der angepasste Betrieb der Heizeinrichtung an eine vorgegebene Grenztemperatur des Katalysators vorgeschlagen. Diese Grenztemperatur ist dabei nicht über die Lebensdauer bzw. Betriebsdauer der Abgasanlage konstant sondern variabel. Sie orientiert sich am aktuellen Alter bzw. Alterungszustand des Katalysators. Für den (bevorzugten) Fall, dass die Grenztemperatur (etwa) die light-off Temperatur des Katalysators repräsentiert, steigt die vorgegebene Grenztemperatur des Katalysators folglich in diesem Zeitraum regelmäßig insgesamt an. Dies kann kontinuierlich und/oder stufenweise erfolgen. Gegebenenfalls kann nach einer Reinigung bzw. Entgiftung des Katalysators die Grenztemperatur wieder gesenkt werden.

Diesbezüglich ist es auch vorteilhaft, wenn die altersabhängige Grenztemperatur, bei der der Katalysator die light-off-Temperatur erreicht, zu jedem Zeitpunkt des Betriebs der Verbrennungskraftmaschine bekannt ist. Diese Grenztemperatur variiert entsprechend in Abhängigkeit des aktuellen Alters bzw. Alterungszustandes des Katalysators. Die Heizeinrichtung wird folglich mit zunehmendem Alter des Katalysators entsprechend frühzeitiger bzw. länger zugeschaltet, um den Katalysator möglichst (genau) dann auf eine Temperatur oberhalb oder gleich der Grenztemperatur zu bringen. Dabei ist insbesondere zu berücksichtigen, dass durch die elektrische Heizeinrichtung nicht die gesamte stromabwärts angeordnete Oberfläche des Katalysators auf die Grenztemperatur erwärmt werden muss, sondern es ist insbesondere ausreichend, nur einen kleinen Teilbereich so aufzuheizen, dass lokal die Grenztemperatur erreicht wird. Durch die dann lokal einsetzende katalytische Umsetzung der unverbrannten Kohlenwasserstoffe wird ausreichend Energie aus der exothermen Reaktion der Verbrennung der Kohlenwasserstoffe frei, so dass eine sehr schnelle Erwärmung des gesamten Katalysators erfolgt und entsprechend eine große Menge an (ggf. auch zwischengespeicherten) Kohlenwasserstoffen umsetzbar wird.

Erfindungsgemäß weist das Verfahren zumindest die folgenden Schritte auf:
- Bestimmen einer Umsetzungstemperatur des Katalysators,
- Vergleich der Umsetzungstemperatur mit einer vorgegebenen Grenztemperatur,
- Betreiben der Heizeinrichtung, wenn die Umsetzungstemperatur die vorgegebene Grenztemperatur unterschreitet.

Die Umsetzungstemperatur bezeichnet die Temperatur des Katalysators zu dem Zeitpunkt, bei der eine bestimmte (noch zulässige) Menge an unverbrannten Kohlenwasserstoffen den Katalysator bereits durchströmt hat, ohne dass diese durch den (aktiven) Katalysator umgewandelt wurden. Insbesondere erfolgt die Bestimmung der Umsetzungstemperatur des Katalysators nur dann, wenn aufgrund des Alterungszustandes des Katalysators anzunehmen ist, dass die Grenztemperatur bereits höher als die Umsetzungstemperatur ist. Auch eine zyklische und/oder kontinuierliche Abfrage der Umsetzungstemperatur des Katalysators ist möglich. Zur sicheren Umsetzung der unverbrannten Kohlenwasserstoffe entspricht die Umsetzungstemperatur bevorzugt der Temperatur des Katalysators, die dieser zu dem Zeitpunkt aufweisen muss, wenn eine Anzahl an unverbrannten Kohlenwasserstoffen den Katalysator erreicht die die zulässige Menge an unverbrannten Kohlenwasserstoffen überschreiten würde, die an die Umgebung abgegeben werden darf. Diese zulässige Menge wird insbesondere durch Emissionsvorschriften vorgegeben. Die Umsetzungstemperatur muss insbesondere nicht am Katalysator selbst gemessen werden und/oder mit an anderen Stellen der Abgasleitung gemessenen Temperaturen übereinstimmen. Vielmehr kann diese Umsetzungstemperatur ausgehend von der Abgastemperatur auch rechnerisch ermittelt werden. Dementsprechend wird die Heizeinrichtung zum Erwärmen des Katalysators insbesondere nur dann betrieben, wenn die Umsetzungstemperatur die vorliegende Grenztemperatur unterschreitet, also z.B. die light-off-Temperatur des Katalysators nicht erreicht ist.

Gemäß einer Weiterbildung des Verfahrens wird eine Anpassung einer Heizleistung der Heizeinrichtung durch den Betrieb einer unterschiedlichen Anzahl von Heizsegmenten oder durch eine verschiedene Anschaltdauer der Heizeinrichtung durchgeführt. Selbstverständlich können diese Maßnahmen auch kombiniert durchgeführt werden. Durch das Betreiben einzelner Heizsegmente und/oder durch das (separate, getrennte) Beheizen von Teilbereichen des Katalysators kann eine schnelle lokale Aufheizung des Katalysators erreicht werden, wobei eine geringe elektrische Leistung eingesetzt wird. Durch das lokale Erreichen der light-off Temperatur erfolgt dort zuerst die Umsetzung der unverbrannten Kohlenwasserstoffe. Infolge dieser exothermen Reaktion heizen sich aber benachbarte Bereiche des Katalysators so schnell auf, dass auf eine weitere elektrische Zuheizung verzichtet werden kann.

Erfindungsgemäß wird das Verfahren in einer ersten Betriebsphase eines Kraftfahrzeugs nicht angewendet, sondern erst, wenn die vorgegebene Grenztemperatur einen bestimmten Wert erreicht wird. Dies bedeutet, dass bis zum Erreichen einer bestimmten Grenztemperatur bzw. bis zum Erreichen eines gewissen Alterungszustands des Katalysators davon ausgegangen werden kann, dass ein Zuheizen des Katalysators nicht erforderlich ist, weil dieser regelmäßig die light-off-Temperatur erreicht, bevor eine unzulässige Menge an unverbrannten Kohlenwasserstoffen den Katalysator passiert hat. Dementsprechend wird eine unnötige Ermittlung der Umsetzungstemperatur des Katalysators vermieden und somit die Steuerung des Kraftfahrzeugs durch solche unnötigen Abfragen entlastet. Die erste Betriebsphase kann dabei insbesondere mittels wenigstens einem der folgenden Parameter charakterisiert sein:
- Kilometerlaufleistung des Kraftfahrzeuges, insbesondere 20.000 Kilometer;
- Betriebslaufzeit des Kraftfahrzeuges, insbesondere 100 Stunden.

Es wird weiter ein Kraftfahrzeug mit einer Verbrennungskraftmaschine und einer Abgasanlage sowie einer Steuerung vorgeschlagen, wobei die Abgasanlage zumindest eine Heizeinrichtung und einen stromabwärts der Heizeinrichtung angeordneten Katalysator aufweist. Die Steuerung ist dabei zur Durchführung des erfindungsgemäßen Verfahrens eingerichtet.

Die Erfindung sowie das technische Umfeld werden nachfolgend anhand der Figuren veranschaulicht. Es ist darauf hinzuweisen, dass die Figuren besonders bevorzugte Ausführungsbeispiele zeigen, auf die die Erfindung jedoch nicht beschränkt ist. Gleiche Bezugszeichen bezeichnen in den Figuren gleiche Gegenstände. Es zeigen schematisch:
- Fig. 1:: ein Kraftfahrzeug mit einer Abgasanlage,
- Fig. 2:: eine Heizeinrichtung,
- Fig. 3:: eine mögliche Veränderung der Grenztemperatur eines Katalysators in Abhängigkeit seines Alters, und
- Fig. 4:: einen Betriebszustand einer Verbrennungskraftmaschine.

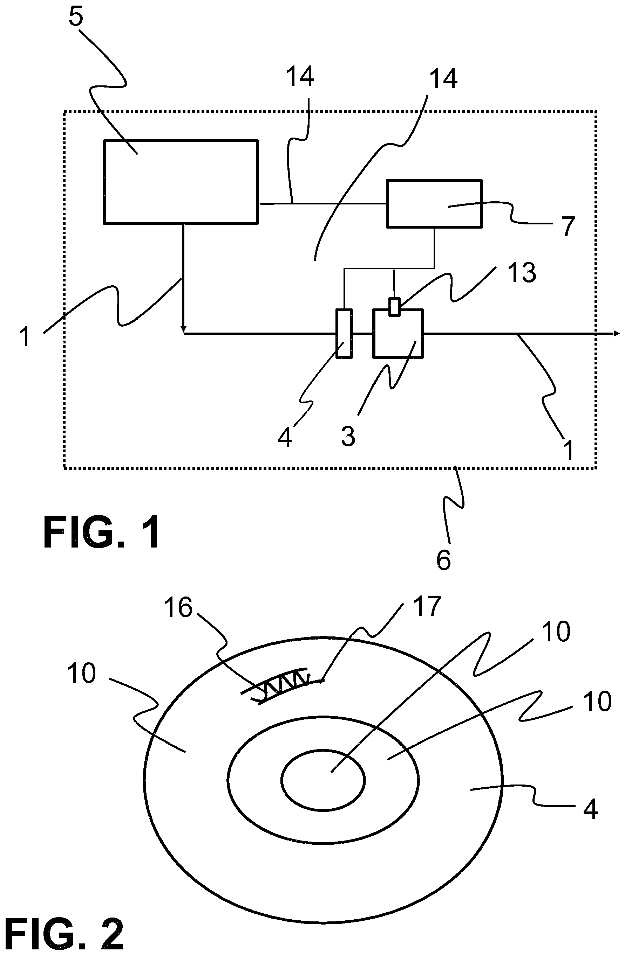

Fig. 1 veranschaulicht schematisch die für das erfindungsgemäße Verfahren bevorzugt vorgesehenen Komponenten. Dabei weist ein Kraftfahrzeug 6 eine Verbrennungskraftmaschine 5 mit einer Abgasanlage 1 auf, wobei in der Abgasanlage 1 eine Heizeinrichtung 4 und ein Katalysator 3 vorgesehen sind. Dem Katalysator 3 sind Sensoren 13 zugeordnet, die z. B. zur Ermittlung der jeweils vorherrschenden Temperatur des Katalysators 3 geeignet sind. Die Sensoren 13 sind über Steuerleitungen 14 mit einer Steuerung 7 verbunden, wobei über die Steuerleitung 14 einerseits die ermittelten Sensorwerte übertragbar sind, andererseits aber auch eine elektrische Zuheizung der Heizeinrichtung 4 möglich ist. Weiterhin ist die Steuerung 7 mit der Verbrennungskraftmaschine 5 über Steuerleitungen 14 verbunden, so dass die Steuerung 7 über Betriebszustände der Verbrennungskraftmaschine 5 Informationen erhalten kann. Die Steuerung kann zusätzlich mit wenigstens einem Speicherelement ausgebildet sein oder auf ein solches Zugriff haben, wo beispielsweise Kennfelder, Erfahrungswerte, Parametergrenzwerte und ähnliches abrufbar und/oder anpassbar sind.

Fig. 2 zeigt in einem Querschnitt eine Ausführungsvariante einer Heizeinrichtung 4 nach Art eines Wabenkörpers, wobei hier zusätzlich verschiedene Heizsegmente 10 ringförmig umeinander angeordnet sind. Die Heizeinrichtung 4 weist metallische glatte Folien 17 sowie metallische strukturierte Folien 16 auf, die aufeinander gestapelt und/oder gewunden und/oder gewickelt die Heizeinrichtung 4 bilden. Dazu sind die strukturierten Folien 16 bzw. glatten Folien 17 mit einer oder mehreren Elektroden verbunden (nicht dargestellt), so dass die Heizeinrichtung 4 z. B. als Widerstandsheizung betrieben werden kann.

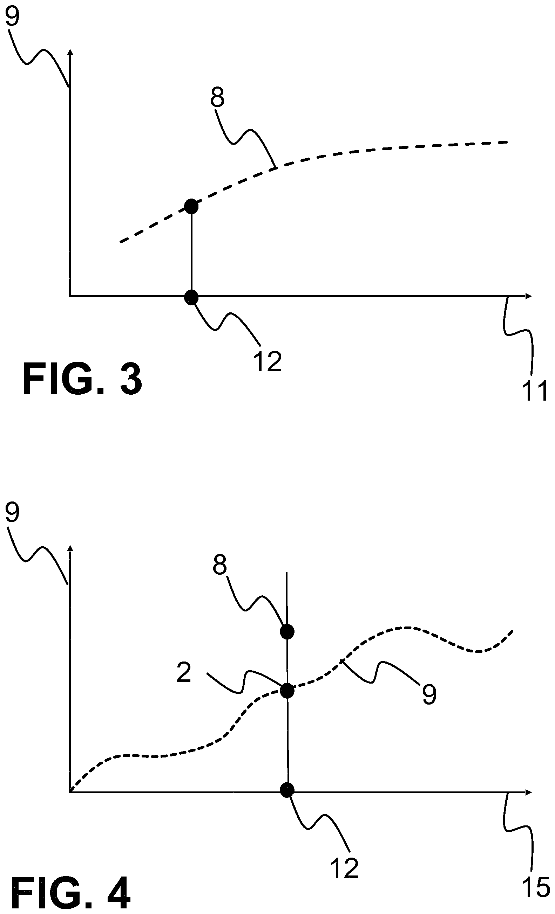

Fig. 3 zeigt einen potentiellen Verlauf einer Grenztemperatur 8 über die Betriebsdauer bzw. die Lebensdauer des Katalysators in der Abgasanlage in Abhängigkeit des Alters 11 des Katalysators. Auf der vertikalen Achse ist die Temperatur 9 aufgetragen, auf der horizontalen Achse das Alter 11 des Katalysators. Fig. 3 zeigt, dass mit zunehmendem Alter 11 des Katalysators auch die Grenztemperatur 8 zu höheren Temperaturwerten verschoben wird. Zu einem bestimmten Zeitpunkt 12 ist dementsprechend ein Alterungszustand des Katalysators erreicht, bei dem eine bestimmte Grenztemperatur 8 festgestellt werden kann.

Fig. 4 zeigt einen Betriebszustand der Verbrennungskraftmaschine 5, wobei auf der horizontalen Achse die Zeit 15 aufgetragen ist und auf der vertikalen Achse die Temperatur 9. Die Temperatur 9 ist hier insbesondere die im Katalysator durch einen Temperatursensor 13 festgestellte jeweils aktuelle Temperatur. Zu einem bestimmten Zeitpunkt 12 entspricht die ermittelte Temperatur 9 des Katalysators der Umsetzungstemperatur 2, bei der die katalytische Umsetzung von Kohlenwasserstoffen durch den Katalysator erfolgen muss, weil eine gerade noch zulässige Menge an unverbrannte Kohlenwasserstoffen den Katalysator bereits passiert haben. Zu diesem Zeitpunkt 12 liegt eine Grenztemperatur 8 vor, die entsprechend Fig. 4 oberhalb der aktuell ermittelten Temperatur 9 bzw. der Umsetzungstemperatur 2 liegt. Das bedeutet, dass ein Zuheizen durch die Heizeinrichtung erforderlich ist, um den Katalysator auf eine entsprechende Grenztemperatur 8 aufzuheizen, so dass die unverbrannten Kohlenwasserstoffe in dem Katalysator umgesetzt werden können.

Die vorliegende Erfindung mit all ihren Varianten wie in den beigefügten Anprüchen definiert löst die mit Bezug auf den Stand der Technik geschilderten Probleme. Insbesondere wird ein Verfahren zum Betrieb einer Abgasanlage angegeben, das sicherstellt, dass eine möglichst geringe Menge an unverbrannten Kohlenwasserstoffen durch die Abgasleitung in die Umgebung strömt. Zudem kann das vorgeschlagene System für die gesamte Lebenszeit bzw. Betriebszeit in einem Kraftfahrzeug hinsichtlich der Schadstoffwerte besonders gut eingestellt und effizient betrieben werden. Dies bringt insbesondere Kostenvorteile und ermöglicht eine praktisch vollständige Umsetzung der Kohlenwasserstoffe über die gesamte Betriebsdauer der Abgasanlage mit geringem energetischen Aufwand.

### Bezugszeichenliste

- 1: Abgasanlage
- 2: Umsetzungstemperatur
- 3: Katalysator
- 4: Heizeinrichtung
- 5: Verbrennungskraftmaschine
- 6: Kraftfahrzeug
- 7: Steuerung
- 8: Grenztemperatur
- 9: Temperatur
- 10: Heizsegmente
- 11: Alter
- 12: Zeitpunkt
- 13: Sensor
- 14: Steuerleitung
- 15: Zeit
- 16: Strukturierte Folie
- 17: Glatte Folie

## Patentansprüche

1. Verfahren zum Betrieb einer Abgasanlage (1) einer Verbrennungskraftmaschine (5) eines Kraftfahrzeuges (6), aufweisend zumindest eine Heizeinrichtung (4) und einen Katalysator (3) zur Umsetzung von Kohlenwasserstoffen, wobei die Heizeinrichtung (4) in Abhängigkeit des Alterungszustandes des Katalysators (3) angepasst betrieben wird; wobei die Heizeinrichtung (4) zumindest in Abhängigkeit einer vorgegebenen Grenztemperatur (8) des Katalysators (3) betrieben wird und wobei die vorgegebene Grenztemperatur (8) in Abhängigkeit von einem aktuellen Alter des Katalysators (3) variiert; zumindest aufweisend die folgenden Schritte:
- Bestimmten einer Umsetzungstemperatur (2) des Katalysators (3),
- Vergleich Umsetzungstemperatur (2) mit einer vorgegebenen Grenztemperatur (8),
- Betreiben der Heizeinrichtung (4), wenn die Umsetzungstemperatur (2) die vorgegebene Grenztemperatur (8) unterschreitet;
wobei das Verfahren in einer ersten Betriebsphase eines Kraftfahrzeuges (6) nicht angewandt wird, sondern erst, wenn die vorgegebene Grenztemperatur (8) einen bestimmten Wert (11) erreicht; wobei so eine unnötige Ermittlung der Umsetzungstemperatur (2) des Katalysators (3) vermieden und somit eine Steuerung des Kraftfahrzeugs (6) durch Abfragen entlastet
wird, wobei die Umsetzungstemperatur die Temperatur des Katalysators zu dem Zeitpunkt bezeichnet, bei der eine bestimmte Menge an unverbrannten Kohlenwasserstoffen den Katalysator bereits durchströmt hat, ohne dass diese durch den Katalysator umgewandelt wurden.

2. Verfahren nach Patentanspruch 1, wobei eine Anpassung einer Heizleistung der Heizeinrichtung (4) durch den Betrieb einer unterschiedlichen Anzahl von Heizsegmenten (10) oder durch eine verschiedene Anschaltdauer der Heizeinrichtung (4) durchgeführt wird.

3. Kraftfahrzeug (6) mit einer Brennkraftmaschine (5) und einer Abgasanlage (1) sowie einer Steuerung (7); wobei die Abgasanlage zumindest eine Heizeinrichtung (4) und einen stromabwärts der Heizeinrichtung (4) angeordneten Katalysator (3) zur Umwandlung von Kohlenwasserstoffen aufweist, wobei die Steuerung (7) zur Durchführung des Verfahrens gemäß einem der Patentansprüche 1 und 2 eingerichtet ist.

## Claims

1. Method for operating an exhaust system (1) of an internal combustion engine (5) of a motor vehicle (6), having at least one heating device (4) and one catalytic converter (3) for the conversion of hydrocarbons, wherein the heating device (4) is operated with adaptation as a function of the aging state of the catalytic converter (3), wherein the heating device (4) is operated at least as a function of a predefined threshold temperature (8) of the catalytic converter (3), and wherein the predefined threshold temperature (8) varies as a function of a present age of the catalytic converter (3); at least having the following steps:
- determining a conversion temperature (2) of the catalytic converter (3),
- comparing the conversion temperature (2) with a predefined threshold temperature (8),
- operating the heating device (4) if the conversion temperature (2) is lower than the predefined threshold temperature (8);
wherein the method is implemented not in a first operating phase of a motor vehicle (6) but only when the predefined threshold temperature (8) reaches a particular value (11); wherein in that way an unnecessary determination of the conversion temperature of the catalytic converter is eliminated, and thus the controller of the motor vehicle is not burdened by unnecessary interrogations; wherein the conversion temperature refers to the temperature of the catalytic converter at the time at which a certain quantity of unburned hydrocarbons has already flowed through the catalytic converter without being converted by the catalytic converter.

2. Method as claimed in claim 1, wherein an adaptation of a heating power of the heating device (4) is realized by operating a different number of heating segments (10) or by implementing a different activation duration of the heating device (4).

3. Motor vehicle (6) having an internal combustion engine (5) and an exhaust system (1) and a controller (7), wherein the exhaust system has at least one heating device (4) and one catalytic converter (3), arranged downstream of the heating device (4), for the conversion of hydrocarbons, wherein the controller (7) is designed for carrying out the method as claimed in one of claims 1 and 2.

## Revendications

1. Procédé pour faire fonctionner une installation de gaz d'échappement (1) d'un moteur à combustion interne (5) d'un véhicule automobile (6), présentant au moins un dispositif de chauffage (4) et un catalyseur (3) pour la conversion d'hydrocarbures, dans lequel on fait fonctionner le dispositif de chauffage (4) de manière adaptée en fonction de l'état de vieillissement du catalyseur (3); dans lequel on fait fonctionner le dispositif de chauffage (4) au moins en fonction d'une température limite prédéterminée (8) du catalyseur (3) et dans lequel la température limite prédéterminée (8) varie en fonction d'un âge actuel du catalyseur (3); comprenant au moins les étapes suivantes:
- déterminer une température de conversion (2) du catalyseur (3);
- comparer la température de conversion (2) avec une température limite prédéterminée (8),
- faire fonctionner le dispositif de chauffage (4), lorsque la température de conversion (2) est inférieure à la température limite prédéterminée (8);
dans lequel on n'applique pas le procédé dans une première phase de fonctionnement d'un véhicule automobile (6), mais uniquement lorsque la température limite prédéterminée (8) atteint une valeur déterminée (11); dans lequel on évite ainsi une détermination inutile de la température de conversion (2) du catalyseur (3) et on soulage ainsi une commande du véhicule automobile (6) par interrogation, dans lequel la température de conversion désigne la température du catalyseur à l'instant auquel une quantité déterminée d'hydrocarbures imbrûlés a déjà franchi le catalyseur, sans que ceux-ci aient été convertis par le catalyseur.

2. Procédé selon la revendication 1, dans lequel on effectue une adaptation d'une puissance de chauffage du dispositif de chauffage (4) par le fonctionnement d'un nombre différent de segments de chauffage (10) ou par une durée de connexion différente du dispositif de chauffage (4).

3. Véhicule automobile (6) avec une chambre de combustion (5) et une installation de gaz d'échappement (1) ainsi qu'avec une commande (7); dans lequel l'installation de gaz d'échappement présente au moins un dispositif de chauffage (4) et un catalyseur (3) disposé en aval du dispositif de chauffage (4) pour la conversion d'hydrocarbures, dans lequel la commande (7) est configurée pour l'exécution du procédé selon une des revendications 1 et 2.
